# EUROPEAN PATENT SPECIFICATION

(11) **EP 2 366 925 B1**
(45) Date of publication and mention of the grant of the patent: **19.12.2012**
(21) Application number: 11250236.4
(22) Date of filing: 01.03.2011
(51) Int. Cl.: F16K 31/00, G05D 23/02

(54) **Thermally operated valve**
Thermisch betriebenes Ventil
Vanne commandée thermiquement

(30) Priority: 01.03.2010 US 714662
(43) Date of publication of application: 21.09.2011
(73) Proprietor: Hamilton Sundstrand Corporation, Windsor Locks, CT 06096-1010 (US)
(72) Inventor: Chun, Richard K., Alhambra California 91801 (US)
(74) Representative: Tomlinson, Kerry John

(56) References cited:
- DE-A1- 3 733 740
- FR-A5- 2 136 023
- GB-A- 2 390 663
- US-A- 3 340 893
- US-A- 3 696 997
- US-A- 3 833 171
- US-A- 5 879 594

## Description

### BACKGROUND OF THE INVENTION

This application relates to a valve that provides precise movement of a valve pin relative to a valve seat through the use of materials having distinct coefficients of thermal expansion.

Valves are utilized in any number of applications to control the flow of fluids from one location to another. In a typical valve, a valve seat receives a valve pin, and when the valve pin is seated in the seat, fluid flow is blocked from an upstream location to a downstream location. The valve pin is moved relative to the valve seat to allow fluid flow.

Typically, some actuator is provided to move the valve pin. The use of an actuator requires additional components, and is somewhat expensive. Moreover, the actuator may not provide precise movement, or adequate sealing.

It has been proposed to utilize a material which expands or contracts with heating and cooling to form the valve pin. In such valves, the valve pin moves when heated to allow flow of fluid. Such a value is disclosed in US 5879594.

### SUMMARY OF THE INVENTION

A valve for precisely metering a small amount of fluid has a housing including a valve seat. A valve pin is supported by a support shell. The support shell and the valve pin have distinct coefficients of thermal expansion such that when exposed to a temperature change, the support shell moves differently than the valve pin. In this way, the valve pin can be caused to move toward and away from the valve seat to allow operation of the valve.

A method of operating a valve to precisely meter a small amount of fluid includes the steps of: (a) providing a housing including a valve seat; (b) connecting a valve pin to a support shell, said support shell and said valve pin having distinct coefficients of thermal expansion; and (c) said valve pin and said support shell moving in response to a temperature change with movement of said support shell and said valve pin being different, and said valve pin moving toward or away from said valve seat to allow operation of said valve.

The valve and method of operation thereof according to the present invention are characterised in that a heater or cooling means is provided to cause said movement of said valve pin relative to said valve seat.

These and other features of the present invention can be best understood from the following specification and drawings, the following of which is a brief description.

### BRIEF DESCRIPTION OF THE DRAWINGS

Figure 1A shows first embodiment.
Figure 1B shows the first embodiment valve seated.
Figure 2 shows a second embodiment.

### DETAILED DESCRIPTION OF THE PREFERRED EMBODIMENT

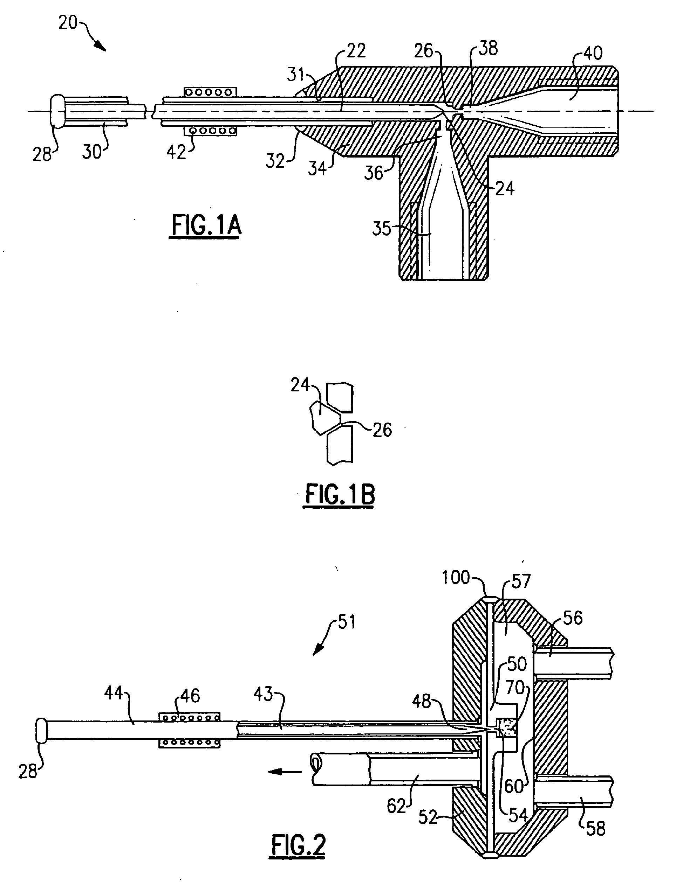

A valve 20 is shown in Figure 1A having a valve pin 22. Valve pin 22 has a head 24 that selectively seats in a valve seat 26 to control the flow of a fluid from an upstream location 35, to a port 36, through the valve seat 26, and to a downstream port 38 in a downstream connection 40.

The valve pin 22 is coupled at 28 to a support shell 30. The support shell 30 is received within a bore 31, and coupled at 32 to the housing 34. The coupling at 28 and 32 may be performed by welding or other techniques known in the art. The support shell 30 is formed of a material having a different coefficient of thermal expansion than the valve pin 22. The difference in the coefficient of thermal expansion may be selected such that the coefficient of one of the materials will be at least twice the coefficient of the other. This will provide significant movement that can be achieved in a relatively short period of time to provide better control over the amount of a sample fluid, as an example.

In one embodiment, the support shell 30 and the housing 34 are formed of a stainless steel, and in particular stainless steel 304. In that same embodiment, the valve pin 22 may be formed of a tungsten. With such materials, the stainless steel will expand with a coefficient of thermal expansion that is three or four times the coefficient of the tungsten.

While the support shell 30 is shown in Figure 1A as a cylindrical element surrounding a cylindrical valve pin, other embodiments of the support shell 30 which support the valve pin 22 for movement relative to the valve seat 26 can be utilized. As an example, spaced legs, or even a single support leg may support the valve pin 22 and cause movement of the valve pin 22 relative to the valve seat 26.

When exposed to heat, the support shell 30 will expand more than the valve pin 22. Since the two are connected together, this will cause the valve pin 22 to move to the left as shown in Figure 1A, and such that the head 24 moves from the position shown in Figure 1B at which it seals the connection, to the position shown at Figure 1A, wherein it allows fluid flow. A heater 42 is provided to drive the expansion.

The present invention is capable of providing very precise movement of the valve pin 22, such that extremely small amounts of fluid can be metered between port 36 to port 38. The valve 20 is particularly well suited for applications in which it is desirable to gather a small metered quantity of a gas.

While the valve pin 22 is described as having the lower coefficient of thermal expansion relative to the support shell 30 or housing 34, the opposite could be utilized. In addition, while heating is disclosed as actuating the valve 20, in fact cooling can be used to actuate the valve 20 in other embodiments. For example, depending upon the materials selected for the valve pin 22 and the support shell 30, the valve 20 can be configured to passively open or close responsive to an increase or decrease temperature.

Figure 2 shows another embodiment of a valve 51 wherein a valve pin 43 is received within a support shell 44, and a heater coil 46 is provided. The valve pin 43 has a head 48 selectively received in an opening 54 in a diaphragm 50, where the diaphragm 50 at opening 54 serves as a valve seat for valve pin 43. Diaphragm 50 is secured within a housing 52. An inlet 56 extends into a chamber 57, and an outlet 58 extends outwardly of the chamber. A vacuum connection 62 is applied to an opposed side of the diaphragm.

In the embodiment shown in Figure 2, the materials and basic mounting of the support shell 44 and valve pin 43 may be as shown for the support shell 30 and valve pin 22 of the Figure 1A embodiment. As shown in Figure 2, the support shell 44 is supported within the housing 52. A weld joint 100 secures the diaphragm 50 within the housing 52.

A frit 70, which may be formed of a powdered sintered metal, allows a controlled amount of leakage across its surface area in a pre-determined period of time. In this embodiment, a very precise amount of gas may be sampled by simply actuating the valve 51 to pull the valve pin head 48 away from the opening 54, and while a vacuum is applied. This will sample a very precise amount of the fluid flowing between inlet 56 to outlet 58. The sample is drawn across the frit 70 and into connection 62.

In the embodiments as depicted in Figures 1A and 2, the valve pins 22 and 43 may be held against the valve seat 26 and opening 54 in diaphragm 50 to provide a very tight fit, and a very secure seal to prevent leakage. The diaphragm 50 also allows the embodiment to be utilized in extremely cold environments. In such a cold environment, thermal expansion will operate to cause the sleeve and pin to be drawn toward the diaphragm to provide a very tight fit. The flexible diaphragm allows this movement, without damage to the overall valve. In prior art valves having moving valve parts, to provide a solid or high force holding the valve pin against the seat requires that same high force to be overcome. However, since the expansion of the materials in the disclosed embodiments is what causes the movement here, that concern does not apply as much as in the prior art. Also, very precise movement of a valve element relative to its housing is provided by the disclosed embodiments, and precise metering can be achieved.

In one application, an embodiment of the valve 20 of Figure 1A was made to close off a fused silica capillary with an internal dimension of 100 micrometers (.0039 inches). With a two inch (50.8 mm) tungsten pin and 200 degree F (93.33 degrees C) rise in temperature, the gap between the valve pin 22 and the valve seat 26 is 0.0029 inches (73.66 mm). This gap is well suited for this 100 micrometers capillary application. The diameter of valve pin 22 and the wall thickness of the support shell 30 may be selected such that the valve seat 26 can be operated within the elastic limits of the material and hold helium leak rate of less than 10**-10 standard cubic centimeter per second (SCCS). A worker of ordinary skill in the art, armed with the coefficients of expansion, and the particular sizes of the components, would be able to calculate the relative movement of the valve pin 22, and the support shell 30 to achieve this tight control.

In many valve applications, both the valve pin and the valve seat are polished after formation. However, it is preferred in this embodiment that only the valve pin is polished, with the valve seat left unpolished. Then, during initial run-in, the valve will form the actual contour of the valve seat such that a very tight and precise seat will be provided that will block almost all leakage.

The valves 20 and 51 of Figures 1A and 2 have no moving parts, making the valves 20 and 51 very reliable and simple to manufacture. Dead volume is very small, which is well suited for applications requiring low leak rate, low dead volume and reliable applications such as gas chromatography, flow switching devices, and vacuum systems. Of course, any other size and material may be used.

Although embodiments of this invention have been disclosed, a worker of ordinary skill in this art would recognize that certain modifications would come within the scope of this invention as defined by the appended claims.

## Claims

1. A valve (20) for precisely metering a small amount of a fluid comprising:
a housing (34) including a valve seat (26);
a valve pin (22), said valve pin (22) being supported by a support shell (30); and
said support shell (30) and said valve pin (22) having different coefficients of thermal expansion such that when exposed to a temperature change, movement of said support shell (30) and said valve pin (22) are different, and said valve pin (22) can be caused to move toward and away from said valve seat (26) to allow operation of said valve (20);
**characterised in that** a heater (42) or cooling means is provided to cause said movement of said valve pin (22) relative to said valve seat (26).

2. The valve (20) as set forth in claim 1, wherein said valve pin (22) has a lower coefficient of thermal expansion than said support shell (30).

3. The valve (20) as set forth in claim 1 or 2, wherein the coefficient of thermal expansion of one of said support shell (30) and said valve pin (22) is at least twice as high as the coefficient of thermal expansion of the other.

4. The valve (20) as set forth in claim 1, 2 or 3, wherein an end of said valve pin (22) and an end of said support shell (30) remote from said seat (26) are secured together such that said movement of said support shell (30) causes said valve pin (22) to move relative to said valve seat (26).

5. The valve (20) as set forth in claim 1, 2, 3 or 4, wherein said heater (42) heats said support shell (30) to cause said shell (30) to expand, and cause movement of said valve pin (22).

6. The valve (20) as set forth in any preceding claim, wherein said support shell (30) is secured in said valve seat housing (34), and such that expansion of said support shell (30) at a greater rate than expansion of said valve pin (42) causes movement of said valve pin (42).

7. The valve (20) as set forth in any preceding claim, wherein said valve seat (26) is formed in a diaphragm member (50).

8. The valve (20) as set forth in claim 7, wherein said valve seat (26) is formed as an opening (54) in said diaphragm (50), and a material allows leakage of a very precise amount of fluid across the material and to said opening (54), and said valve pin (42) being pulled away from said valve seat (26), such that a very precise amount of fluid can leak across the material, and to a sampling outlet.

9. The valve (20) as set forth in any preceding claim, wherein said valve pin (22) is formed of tungsten, and said support shell (30) is formed of a stainless steel.

10. The valve (20) as set forth in any preceding claim, wherein said support shell (30) is a cylindrical element surrounding said valve pin (22).

11. A method of operating a valve (20) to precisely meter a small amount of fluid including the steps of:
(a) providing a housing (34) including a valve seat (26);
(b) connecting a valve pin (22) to a support shell (30), said support shell (30) and said valve pin (22) having distinct coefficients of thermal expansion; and
(c) said valve pin (22) and said support shell (30) moving in response to a temperature change with movement of said support shell (30) and said valve pin (22) being different, and said valve pin (22) moving toward or away from said valve seat (26) to allow operation of said valve (20),
**characterised in that** heating or cooling is provided by a heater or cooling means to cause said valve pin (22) to move toward or away from said valve seat (26).

12. The method as set forth in claim 11, wherein heating or cooling is applied to said support shell (30) and to said valve pin (22) to cause said movement of said valve pin (22).

## Patentansprüche

1. Ventil (20) zum genauen Zumessen einer kleinen Menge eines Fluids aufweisend:
ein Gehäuse (34) mit einem Ventilsitz (26);
eine Ventilnadel (22), wobei die Ventilnadel (22) durch eine Stützhülse (30) gestützt wird; und
die Stützhülse (30) und die Ventilnadel (22) verschiedene thermische Ausdehnungskoeffizienten aufweisen derart, dass, wenn sie einer Temperaturänderung ausgesetzt werden, eine Bewegung der Stützhülse (30) und der Ventilnadel (22) unterschiedlich sind, und bewirkt werden kann, dass die Ventilnadel (22), sich zu dem Ventilsitz (26) hin und von diesem weg bewegt, um einen Betrieb des Ventils (20) zu ermöglichen,
**dadurch gekennzeichnet, dass** eine Heizeinrichtung (42) oder ein Kühlmittel vorgesehen ist, um die Bewegung der Ventilnadel (22) relativ zu dem Ventilsitz (26) zu bewirken.

2. Ventil (20) gemäß Anspruch 1, wobei die Ventilnadel (22) einen kleineren thermischen Ausdehnungskoeffizienten als die Stützhülse (30) aufweist.

3. Ventil (20) gemäß Anspruch 1 oder 2, wobei der thermische Ausdehnungskoeffizient der Stützhülse (30) oder der Ventilnadel (22) wenigstens zweimal so hoch wie der thermische Ausdehnungskoeffizient des anderen Teils ist.

4. Ventil (20) gemäß einem der Ansprüche 1 bis 3, wobei ein Ende der Ventilnadel (22) und ein vom Sitz (26) entferntes Ende der Stützhülse (30) derart aneinander befestigt sind, dass eine Bewegung der Stützhülse (30) bewirkt, dass sich die Ventilnadel (22) relativ zum Ventilsitz (26) bewegt.

5. Ventil (20) gemäß einem der Ansprüche 1 bis 4, wobei die Heizeinrichtung (42) die Stützhülse (30) beheizt, um zu bewirken, dass sich die Hülse (30) ausdehnt, und um eine Bewegung der Ventilnadel (22) zu bewirken.

6. Ventil (20) gemäß einem der vorhergehenden Ansprüche, wobei die Stützhülse (30) in dem Ventilsitzgehäuse (34) und derart befestigt ist, dass eine Ausdehnung der Stützhülse (30) mit einer größeren Rate als eine Ausdehnung der Ventilnadel (42) eine Bewegung der Ventilnadel (42) bewirkt.

7. Ventil (20) gemäß einem der vorhergehenden Ansprüche, wobei der Ventilsitz (26) in einem Membranelement (50) gebildet ist.

8. Ventil (20) gemäß Anspruch 7, wobei der Ventilsitz (26) als eine Öffnung (24) in der Membran (50) gebildet ist, und ein Material einen Ausfluss einer sehr genauen Menge eines Fluids über das Material hinweg und zu der Öffnung (54) ermöglicht und wobei die Ventilnadel (42) von dem Ventilsitz (26) weggezogen wird, sodass eine sehr genaue Fluidmenge über das Material hinweg und zu einem Probenentnahmeauslass ausfließen kann.

9. Ventil (20) gemäß einem der vorhergehenden Ansprüche, wobei die Ventilnadel (22) aus Wolfram gebildet ist und wobei die Stützhülse (30) aus einem rostfreien Stahl gebildet ist.

10. Ventil (20) gemäß einem der vorhergehenden Ansprüche, wobei die Stützhülse (30) ein zylindrisches Element ist, welches die Ventilnadel (22) umgibt.

11. Betriebsverfahren für ein Ventil (20), um eine kleine Menge eines Fluids genau zuzumessen, aufweisend die Schritte:
(a) Bereitstellen eines Gehäuses (34) mit einem Ventilsitz (26);
(b) Verbinden einer Ventilnadel (22) mit einer Stützhülse (30), wobei die Stützhülse (30) und die Ventilnadel (22) unterschiedliche thermische Ausdehnungskoeffizienten aufweisen; und
(c) Bewegen der Ventilnadel (22) und der Stützhülse (30) in Reaktion auf eine Temperaturänderung mit unterschiedlicher Bewegung der Stützhülse (30) und der Ventilnadel (22), und Bewegen der Ventilnadel (22) zu dem Ventilsitz (26) hin und von diesem weg, um einen Betrieb des Ventils (20) zu ermöglichen,
**dadurch gekennzeichnet, dass** Beheizen oder Kühlen durch eine Heizeinrichtung oder ein Kühlmittel vorgesehen ist, um zu bewirken, dass sich die Ventilnadel (22) zu dem Ventilsitz (26) hin und von diesem weg bewegt.

12. Verfahren gemäß Anspruch 1, wobei Beheizen oder Kühlen auf die Stützhülse (30) und die Ventilnadel (22) angewendet wird, um die Bewegung der Ventilnadel (22) zu bewirken.

## Revendications

1. Vanne (20) pour doser précisément une petite quantité de fluide, comprenant :
un logement (34) comportant un siège de vanne (26) ;
une tige de vanne (22), ladite tige de vanne (22) étant supportée par une enveloppe de support (30) ; et
ladite enveloppe de support (30) et ladite tige de vanne (22) ayant des coefficients de dilatation thermique différents, de sorte que, lorsqu'elles sont exposées à un changement de température, le déplacement de ladite enveloppe de support (30) et celui de ladite tige de vanne (22) soient différents et que ladite tige de vanne (22) puisse être amenée à se déplacer en direction dudit siège de vanne (26) et à l'écart de ce dernier pour permettre le fonctionnement de ladite vanne (20),
**caractérisée en ce qu'**un moyen de chauffage (42) ou de refroidissement est prévu pour provoquer ledit déplacement de ladite tige de vanne (22) par rapport audit siège de vanne (26).

2. Vanne (20) selon la revendication 1, dans laquelle ladite tige de vanne (22) a un coefficient de dilatation thermique inférieur à celui de ladite enveloppe de support (30).

3. Vanne (20) selon la revendication 1 ou 2, dans laquelle le coefficient de dilatation thermique de l'une parmi ladite enveloppe de support (30) et ladite tige de vanne (22) est au moins deux fois supérieur au coefficient de dilation thermique de l'autre.

4. Vanne (20) selon la revendication 1, 2 ou 3, dans laquelle une extrémité de ladite tige de vanne (22) et une extrémité de ladite enveloppe de support (30) éloignées dudit siège (26) sont fixées l'une à l'autre de telle sorte que ledit déplacement de ladite enveloppe de support (30) amène ladite tige de vanne (22) à se déplacer par rapport audit siège de vanne (26).

5. Vanne (20) selon la revendication 1, 2, 3 ou 4, dans laquelle ledit chauffage (42) chauffe ladite enveloppe de support (30) pour provoquer la dilatation de ladite enveloppe (30) et provoquer le déplacement de ladite tige de vanne (22).

6. Vanne (20) selon l'une quelconque des revendications précédentes, dans laquelle ladite enveloppe de support (30) est fixée dans ledit logement (34) de siège de vanne, et de telle sorte que la dilatation de ladite enveloppe de support (30) à une vitesse plus élevée que la dilatation de ladite tige de vanne (42) provoque le déplacement de ladite tige de vanne (42).

7. Vanne (20) selon l'une quelconque des revendications précédentes, dans laquelle ledit siège de vanne (26) est formé dans un organe de membrane (50).

8. Vanne (20) selon la revendication 7, dans laquelle ledit siège de vanne (26) est formé en tant qu'ouverture (54) dans ladite membrane (50) et un matériau permet la fuite d'une quantité très précise de fluide à travers le matériau et jusqu'à ladite ouverture (54), et ladite tige de vanne (22) étant tirée à l'écart dudit siège de vanne (26) de telle sorte qu'une quantité très précise de fluide puisse fuir à travers le matériau et jusqu'à une sortie d'échantillonnage.

9. Vanne (20) selon l'une quelconque des revendications précédentes, dans laquelle ladite tige de vanne (22) est formée de tungstène et ladite enveloppe de support (30) est formée d'un acier inoxydable.

10. Vanne (20) selon l'une quelconque des revendications précédentes, dans laquelle ladite enveloppe de support (30) est un élément cylindrique entourant ladite tige de vanne (22).

11. Procédé de fonctionnement d'une vanne (20) pour doser précisément une petite quantité de fluide, comportant les étapes consistant à :
(a) fournir un logement (34) comportant un siège de vanne (26) ;
(b) relier une tige de vanne (22) à une enveloppe de support (30), ladite enveloppe de support (30) et ladite tige de vanne (22) ayant des coefficients de dilatation thermique distincts ; et
(c) ladite tige de vanne (22) et ladite enveloppe de support (30) se déplaçant en réponse à un changement de température, le déplacement de ladite enveloppe de support (30) et celui de ladite tige de vanne (22) étant différents, et ladite tige de vanne (22) se déplaçant en direction dudit siège de vanne (26) ou à l'écart de ce dernier pour permettre le fonctionnement de ladite vanne (20),
**caractérisé en ce qu'**un chauffage ou un refroidissement est produit par un moyen de chauffage ou de refroidissement afin d'amener ladite tige de vanne (22) à se déplacer en direction dudit siège de vanne (26) ou à l'écart de ce dernier.

12. Procédé selon la revendication 11, dans lequel le chauffage ou le refroidissement est appliqué à ladite enveloppe de support (30) et à ladite tige de vanne (22) pour provoquer ledit déplacement de ladite tige de vanne (22).
